# EUROPEAN PATENT SPECIFICATION

(11) **EP 1 826 853 B1**
(45) Date of publication and mention of the grant of the patent: **12.01.2011**
(21) Application number: 06101312.4
(22) Date of filing: 06.02.2006
(51) Int. Cl.: H01M 8/04, H01M 8/10, B01D 19/00, B01D 63/06, B01D 63/08, F25B 41/06

(54) **Carbon dioxide separation system for a direct methanol fuel cell system**
Kohlendioxidabscheider für Direkt-Methanol-Brennstoffzellensystem
Séparateur de dioxyde de carbone pour pile à combustible au méthanol direct

(43) Date of publication of application: 29.08.2007
(73) Proprietor: Samsung SDI Germany GmbH, 12459 Berlin (DE); Samsung SDI Co., Ltd., Suwon-si Gyeonggi-do (KR)
(72) Inventor: Bronold, Matthias Dr., 12209 Berlin (DE)
(74) Representative: Hengelhaupt, Jürgen

(56) References cited:
- EP-A1- 1 520 609
- DE-A1- 10 031 241
- DE-A1- 10 034 401
- US-A1- 2002 192 525
- US-A1- 2005 008 923

## Description

The invention relates to a carbon dioxide separation system for a fuel cell system with the features as stated in the generic term of claim 1.

More particularly, this invention relates to a device for separating carbon dioxide gas from the fuel stream in direct fuel cell systems, especially in Direct Methanol Fuel Cell (DMFC) Systems, which are used for supplying power to mobile electronic devices.

In Fig. 1 a DMFC system is shown (disclosed in document US2004/0166389A1). A fuel cell stack (10) has an air inlet (11) and an air outlet (13). An air pump or fan (12) supplies reaction air to the stack cathode through the air inlet (11). A heat exchanger (50) is mounted in the outlet stream of the fuel cell cathode. A fan (55) is used to cool the heat exchanger, leading to a cooling of the outlet stream and a condensation of water. A two phase flow exits the heat exchanger at the outlet (52). Downstream of the heat exchanger, a water separator (60) is mounted in order to separate liquid water from the air stream. The separated water is fed back to the anode cycle of the fuel cell system by a condensate pump (70), while the residual air is vented through an air venting outlet (61) to the ambience.
One indispensable function of the system is the separation of carbon dioxide from the outlet stream coming out of the stack fuel outlet (16). This outlet stream comprises a mixture of methanol, water and carbon dioxide. For a proper function of the fuel cell, the carbon dioxide has to be separated from the stream prior to the recycling of the fuel stream back into the stack.
An anode cycle for diluted fuel consisting of a carbon dioxide separator (20) mounted downstream from the stack fuel outlet (16) removes carbon dioxide from the reaction stream and vents it to the ambience through a venting opening (21). In a mixer (22) the reaction stream is mixed with pure fuel from a fuel tank (30). A fuel pump (23) feeds the diluted fuel back to the fuel inlet (15) of the stack.

Document EP 1 383 191 A1 discloses another possible embodiment of a carbon dioxide separation device. Here, the carbon dioxide separation is accomplished in a compartment filled with a fuel mixture having an inlet connected to the stack fuel outlet and an outlet connected to the circulation pump. The carbon dioxide bubbles are separated from the fuel mixture by gravity during the stay time of the fuel mixture within the separation compartment. On top of this separation compartment a water separator is mounted. There are openings between the carbon dioxide separation compartment and the water separator leading to the feeding of separated carbon dioxide to the air venting outlet and the separated water into the carbon dioxide separation device (back into the anode cycle), both through the action of gravity. The main disadvantage of this embodiment is the strong dependence on the orientation of the device, i.e. the device essentially works only in upright position. This may also pose problems when the separation device has to be integrated into a flat system set-up as required e.g. for a notebook docking station.

Another embodiment of a carbon dioxide separation device is disclosed in document US 6,869,716. Here the gas separation takes place across a hydrophobic membrane which forms a conduit component around the fuel stream of a two phase fluid containing fluid and carbon dioxide. The backpressure needed to press the carbon dioxide through the separation membrane is formed either by a cone-type design of the hydrophobic conduit or by a hydrophilic passageway at the outlet end of the conduit.
The problem with that solution is that it is difficult to manufacture and system-integrate such a tubular hydrophilic membrane with a small diameter. Due to the condensation of water in the compartment which transfers the carbon dioxide to the ambience these relatively narrow channels might be blocked.
In general, the diffusion rate of a gas across a porous membrane is essentially proportional to the pressure difference between both faces of the membrane, i.e. a higher pressure difference allows for a smaller membrane area and thus a smaller separation device.
The presented means for creating backpressure only lead to a limited pressure and thus to the requirement of a relatively large area of separation membrane.

US 2002/ 0192525 discloses a tubular carbon dioxide separation device comprising a flow restrictor. A separation membrane is in contact with the two phase fluid in order to separate carbon dioxide. After separation, the carbon dioxide is collected within an outer coaxial conduit.

### Object of the invention

Therefore, the object of the invention is to create a carbon dioxide separation system for a fuel cell system with a small volume and weight of the separation device and of the membrane, while simultaneously increasing the separated volume of carbon dioxide.

### Summary of the invention

According to the invention the carbon dioxide separation system for a fuel cell system comprises a separation device which is adapted to contain a fluid phase, a carbon dioxide phase and a two phase fluid consisting of fluid and carbon dioxide , wherein the separation device comprises a two phase fluid inlet, a fluid outlet and a carbon dioxide outlet and a carbon dioxide separation membrane; the separation system further comprises a flow restrictor in order to create a backpressure as to press the separated carbon dioxide through the membrane, wherein the flow restrictor comprises at least one narrow aperture and is mounted downstream of the separation device and wherein the membrane is positioned in such a manner in the separation device that at least a part of the total membrane area is arranged above the two phase fluid level so that at least a part of the total membrane area is in touch solely with carbon dioxide contained in the separation device above the two phase fluid level , wherein the separation membrane is of essentially tubular shape, thereby dividing the separation device into two essentially co-axial compartments, wherein the fluid, the two-phase fluid and compressed carbon dioxide are located in an inner fluid compartment, and wherein a carbon dioxide collection compartment surrounds the fluid compartment and transfers the separated carbon dioxide to the carbon dioxide outlet and wherein an outlet tubing is mounted on a top flange and is elongated into the fluid compartment through a collection tube.
The fluid inlet can be mounted on the top flange.
The two phase fluid flows through the fluid inlet into the separation device wherein the two phase fluid is mostly retained in the separation device because of the small aperture in the fluid outlet. Due to the retaining time of the fluid in the separation device carbon dioxide bubbles are separated from the fuel mixture by gravity and the gas is collected on top of the compartment of the separation device. Due to the continued flow of two phase fluid into the compartment of the separation device and the narrow aperture of the fluid outlet the pressure inside the separation device increases, compressing the carbon dioxide above the two phase fluid. Due to the high pressure carbon dioxide migrates across the membrane.
It is therefore possible to create a high backpressure in the membrane-based separation device and thus to reduce the required membrane surface leading to a small carbon dioxide separation device.
The advantage of this invention is that by designing the diameter and the length of the flow restrictor in a proper way, arbitrary backpressure levels can be generated within the separation compartment enabling a perfect match of the membrane properties, the characteristics of a circulation pump and the system's volume restrictions. Another advantage is that due to the still macroscopic dimensions of the flow restrictor diameter small particles in the fuel stream e.g. loosened catalyst particles do not block the pass.
Additionally, the separation system can be used in a tilted position, because depending on the liquid level and the tilt angle the membrane is at least partially in contact with compressed carbon dioxide which enables the system to separate a larger volume of carbon dioxide out from the internal space of the separation device.
Production costs of the separation system can be lowered, because the separation device can be manufactured for instance by injection molding.
Finally, if the flow restrictor is integrated into an existing tubing connection, it does not consume additional space within the fuel cell system.

Preferably the separator has essentially pot shape.
Further it is preferred that the separation device is adapted in such a manner that due to gravity and density the carbon dioxide phase is located above the two phase fluid, and the fluid inlet is essentially arranged on the top of the device and the fluid outlet is essentially arranged on the bottom of the device.

The carbon dioxide outlet can be arranged close to the top or on the top of the device.
Alternatively, in order to remove condensed water, the carbon dioxide outlet can be arranged close to the bottom on the bottom of the device.

Especially with this embodiment it is possible to use the separation system in different positions. That is, the separation system can be used in a tilted position and also in an overhead position, because the membrane -due to its tubular shape- is always at least partially in sole contact with the compressed carbon dioxide inside the tubular formed membrane.
Thereby the volume of the carbon dioxide separation device can be reduced. The big total area of the membrane leads to a bigger rate of migration of carbon dioxide so that it is possible to arrange a bigger aperture or more apertures in the fluid outlet leading to a higher flow volume in the separation device and a higher efficiency of the whole system.

Preferably the ratio of the total cross section of the apertures in the flow restrictor to the cross section of the compartment containing the fluid and the two phase fluid in the separation device is not greater than 1 /10.

In a preferred solution the flow restrictor is a capillary tube which is integrated into a tubing connection downstream of the carbon dioxide separation system.

Alternatively the flow restrictor can be a nozzle which is integrated into a tubing connection downstream of the carbon dioxide separation system. The flow restrictor can also be a small orifice in the passage of an outer wall of the separation device to a downstream tubing connection, or it can consist of multiple parallel individual backpressure elements of capillaries and/ or nozzles of limited aperture type.
At use of the small orifice the orifice yields a limited aperture in the tubing connection to the downstream system components.

In order to limit the volume of the system, an integrated separation-mixer device can be provided as a single compartment device.

Alternatively, the separation device can be attached to a mixer as two compartments in one unit, the two compartments being separated by a diaphragm. In this embodiment the flow restrictor can be a capillary which is integrated in the internal diaphragm.

### Brief description of the drawings

The present invention will now be described by way of example with reference to the accompanying drawings, in which:
- Fig.1: shows a Direct Methanol Fuel Cell System according to the prior art, used for supplying power to mobile electronic devices.
- Fig.2: shows a simple embodiment comprising a membrane on top of a separation device.
- Fig.3: shows an alternative embodiment comprising a separation device divided into two compartments.
- Fig.4: shows the embodiment *of the invention*, wherein the separation membrane is of essentially tubular shape.
- Fig.5: shows an *embodiment* separation system in which a mixer is integrated into the separation device.
- Fig.6: shows an alternative arrangement to the embodiment of Fig. 3, wherein the separation device is attached to a mixer.
- Fig.7: shows an embodiment with multiple parallel backpressure elements.

### Detailed description of the embodiments

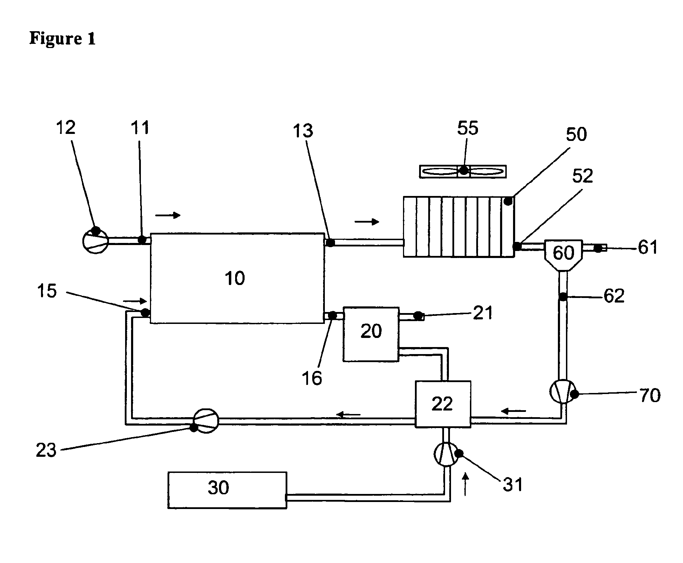

In Fig. 1 prior art is shown (see above).

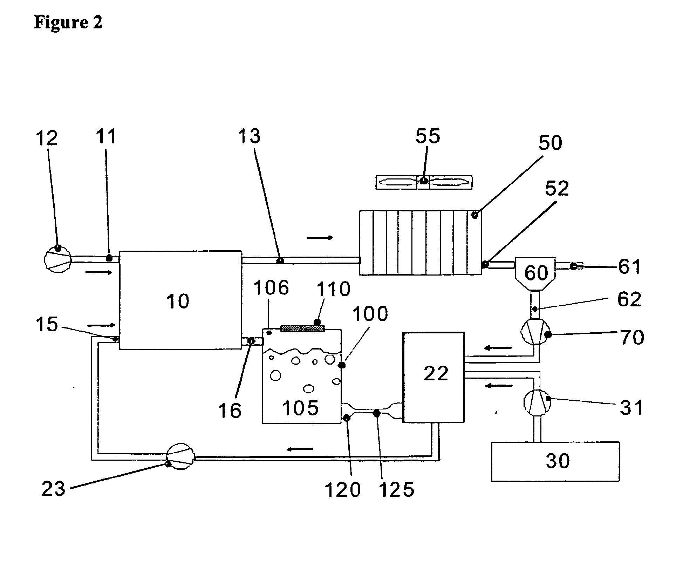

A partial aspect of the invention is shown in Fig. 2. A two phase fluid (105) consisting of diluted methanol and carbon dioxide bubbles leaves the anode outlet (16) of the stack (10). It passes through the carbon dioxide separation compartment (100) where due to the retaining time the carbon dioxide bubbles are separated from the liquid and the gas (106) is being collected on top of the compartment. The carbon dioxide is removed from the separation compartment through a separation membrane (110) which is essentially selective towards carbon dioxide or gases and which retains the liquid inside.

The membrane may be formed out of a porous PTFE material or other types of hydrophobic components. As shown in succeeding embodiments of the invention the membrane is also in simultaneous contact to the liquid as well as to the two phase fluid and the compressed gas volume on top of the fluid.

According to one aspect of invention the pressure needed to press the gas through the membrane is generated by a flow restrictor (125) which is located downstream from the carbon dioxide separation compartment (100) in the connection tube (120) to the mixer (22). In the given example this flow restrictor is formed in the shape of a capillary.

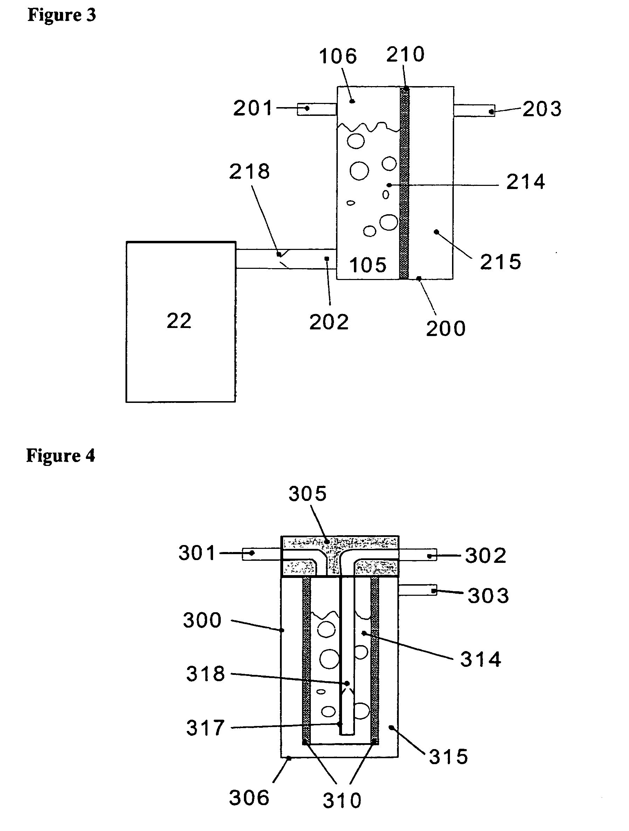

Another carbon dioxide separation system is shown in Fig. 3. The separation device (200) is divided into two compartments by the separation membrane (210). In the fluid compartment (214) the membrane (210) is in contact with the two phase fluid (105) which is fed into the device (200) through the fluid inlet (201) and with segregated gas (106). Carbon dioxide migrates through the membrane into the carbon dioxide collection compartment (215) and is released through the carbon dioxide outlet (203). The fluid (105) is kept out of the carbon dioxide collection compartment (215) due to the hydrophobic nature of the membrane.
In this example the backpressure is generated through a nozzle (218) which is located downstream from the separation device (200) in the fluid connection (202) to the mixer (22).

The embodiment of the invention is shown in Fig. 4. The separation membrane (310) is of essentially tubular shape. It divides the separation device (300) into two essentially co-axial compartments with the two phase fluid in the inner fluid compartment (314), the carbon dioxide collection compartment (315) surrounding the fluid compartment, transferring the separated carbon dioxide to the carbon dioxide outlet (303). The outlet tubing (302) is mounted on a top flange (305) and elongates into the fluid compartment (314) through a collection tube (317). In this case the fluid inlet (301) is also mounted on the top flange (305).

In alternative versions of this embodiment fluid inlet (301) and fluid outlet (302) are mounted on opposite faces of the device, one on the top flange (305) and one on the bottom flange (306).

Due to the independence of the orientation this embodiment can be used in many different positions, that is, both flanges on the top of the device and on the bottom of the device correspond to opposite side faces if the device is mounted horizontally.

The backpressure element is placed inside the volume of the device. In Fig. 4 it is shown as a nozzle (318) in the collection tube (317). Alternatively, the backpressure element is designed to be a capillary part in the collection tube or in the flange section or one or multiple narrow holes in the flange.

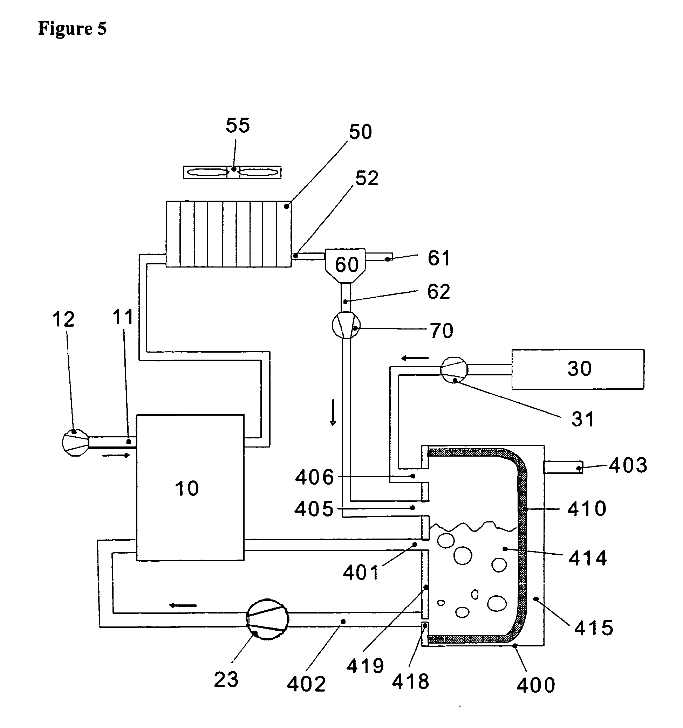

Fig. 5 shows a separation system where the carbon dioxide separation device (400) has also the function of the mixer integrated. In addition to the fluid inlet (401) where the two phase fluid from the stack (10) is fed into the separation device, fuel from the fuel tank (30) may also be injected through the fuel inlet (406), and the condensed water from the water separator (60) may be injected through the water inlet (405).
In alternative embodiments only the fuel or the condensed water may be injected into the combined carbon dioxide separation/mixer device (400), the other liquid being injected into the anode cycle at a different position.

In order to increase the membrane area in a given volume the membrane (410) may be of a bended shape.

In the presented case the backpressure is generated through a small orifice (418) in the wall (419) of the separation device (400) forming a reduced aperture towards the tubing connection (402) to the stack anode inlet.

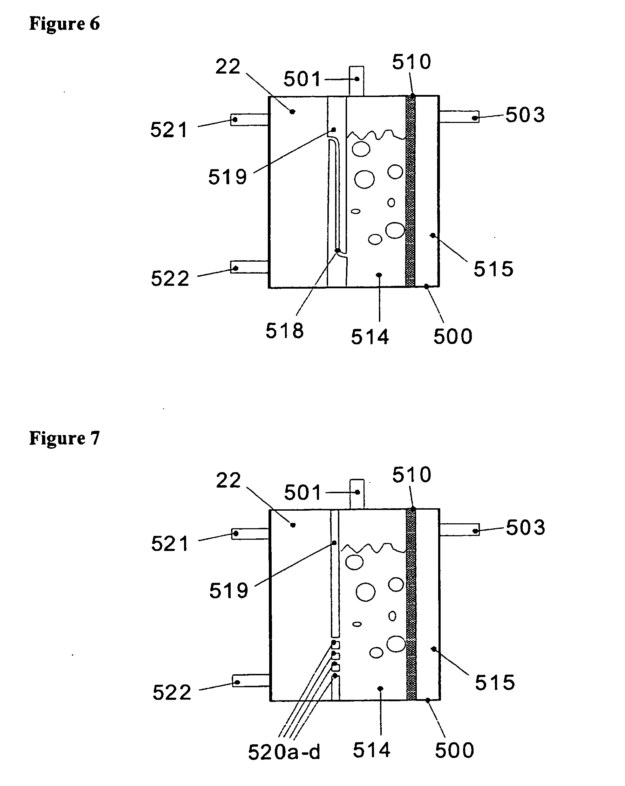

In Fig. 6 an alternative example of a backpressure element is disclosed. Here a diaphragm (519) separates the fluid compartment (514) from the mixing compartment (22). The backpressure is generated through a capillary type connection (518) within the diaphragm when the fluid flows from the fluid compartment downstream into the mixing compartment (22) which it exits through the fluid outlet (522) towards the stack anode inlet. Through the inlet (521) fuel and/or condensed water is injected into the mixer.

Finally, in Fig. 7 a variation of the backpressure element is shown. In order to increase operation reliability (against blocking of the backpressure device) multiple parallel backpressure elements (520a-d) can be implemented. This principle can be applied to the capillary-type, the nozzle type as well as the reduced aperture type backpressure devices.

### List of Reference Signs

- 10: Fuel cell stack
- 11: Cathode inlet of stack
- 12: Air pump
- 13: Cathode outlet of stack
- 15: Anode (fuel) inlet of stack
- 16: Anode (fuel) outlet of stack
- 20: Carbon dioxide separator (separation device)
- 21: Carbon dioxide outlet
- 22: Mixer
- 23: Circulation pump
- 30: Fuel tank
- 31: Fuel pump
- 50: Heat exchanger
- 52: Heat exchanger outlet
- 55: Fan
- 60: Water separator
- 61: Air venting outlet
- 62: Water feedback connection
- 70: Water feedback pump
- 100: Carbon dioxide separation compartment (separation device)
- 105: Two-phase fluid within separation compartment
- 106: Segregated Carbon dioxide gas
- 110: Carbon dioxide separation membrane
- 120: Connecting tube between Carbon dioxide separation compartment and mixer (fluid outlet)
- 125: Flow restrictor (backpressure device)
- 200: Separation device
- 201: Fluid inlet
- 202: Fluid connection to mixer (fluid outlet)
- 203: Carbon dioxide outlet
- 210: Carbon dioxide separation membrane
- 214: Fluid compartment
- 215: Carbon dioxide collection compartment
- 218: Nozzle (flow restrictor)
- 300: Separation device
- 301: Fluid inlet
- 302: Fluid outlet and connection to mixer
- 303: Carbon dioxide outlet
- 305: Top flange
- 306: Bottom flange
- 310: Carbon dioxide separation membrane
- 314: Fluid compartment
- 315: Carbon dioxide collection compartment
- 317: Fluid collection tube
- 318: Nozzle
- 400: Carbon dioxide separator (separation device)
- 401: Two-phase fluid inlet
- 402: Fluid outlet and tubing connection to stack
- 403: Carbon dioxide outlet
- 405: Condensed water inlet
- 406: Fuel inlet
- 410: Separation membrane
- 414: Fluid compartment
- 415: Carbon dioxide compartment
- 418: Limited aperture (flow restrictor)
- 419: Wall of separation device
- 500: Separation device
- 501: Fluid inlet
- 503: Carbon dioxide outlet
- 510: Carbon dioxide separation membrane
- 514: Fluid compartment
- 515: Carbon dioxide collection compartment
- 518: Capillary type connection (flow restrictor)
- 519: Diaphragm
- 520a-d: Parallel backpressure elements (flow restrictor)
- 521: Fuel and/or condensed water inlet
- 522: Fluid outlet

## Claims

1. A carbon dioxide separation system for a fuel cell system, comprising a separation device (20, 100, 200, 300, 400, 500) which is adapted to contain a fluid phase, a carbon dioxide phase and a two-phase fluid consisting of fluid and carbon dioxide, wherein the separation device (20, 100, 200, 300, 400, 500) comprises a two-phase fluid inlet (201, 301, 401, 501), a fluid outlet (120, 202, 302, 402, 522) and a carbon dioxide outlet (21, 203, 303, 403, 503) and a carbon dioxide separation membrane (110, 210, 310, 410, 510); the separation system further comprising a flow restrictor (125, 218, 318, 418, 518, 520 a-d) in order to create a backpressure as to press the separated carbon dioxide through the membrane (110, 210, 310, 410, 510), wherein the flow restrictor (125, 218, 318, 418, 518, 520 a-d) comprises at least one narrow aperture and is mounted downstream of the separation device (20, 100, 200, 300, 400, 500), **characterized in that** the membrane (110, 210, 310, 410, 510) is positioned in such a manner in the separation device that at least a part of the total membrane area is arranged above the two-phase fluid level so that at least a part of the total membrane area is in touch solely with carbon dioxide contained in the separation device above the two-phase fluid level, wherein the separation membrane (310) is of essentially tubular shape, thereby dividing the separation device (300) into two essentially co-axial compartments, wherein the fluid, the two-phase fluid and compressed carbon dioxide are located in an inner fluid compartment (314), and wherein a carbon dioxide collection compartment (315) surrounds the fluid compartment and transfers the separated carbon dioxide to the carbon dioxide outlet (303) and wherein an outlet tubing (302) is mounted on a top flange (305) and is elongated into the fluid compartment (314) through a collection tube (317).

2. Carbon dioxide separation system of claim 1, wherein the separation device (20, 100, 200, 300, 400, 500) has a pot shape.

3. Carbon dioxide separation system of any of the preceding claims, wherein the carbon dioxide phase is located above the two phase fluid and wherein the fluid inlet (201, 301, 401, 501) is arranged on the top of the device and the fluid outlet (120, 202, 302, 402, 522) is arranged on the bottom of the device.

4. Carbon dioxide separation system of any of the preceding claims, wherein the carbon dioxide outlet (203, 303, 403, 503) is arranged close to the top of the device.

5. Carbon dioxide separation system of any of the claims1-4, wherein the carbon dioxide outlet (203, 303, 403, 503) is arranged close to the bottom of the device in order to remove condensed water

6. Carbon dioxide separation system of claim 1, wherein the fluid inlet (301) is also mounted on the top flange (305).

7. Carbon dioxide separation system of any of the preceding claims, wherein the ratio of the total cross section of the apertures in the flow restrictor (125, 218, 318, 418, 518, 520 a-d) to the cross section of the fluid compartment containing the fluid and the two phase fluid in the separation device (20, 100, 200, 300, 400, 500) is not greater than 1/10.

8. Carbon dioxide separation system of any of the preceding claims, wherein the flow restrictor (125, 218, 318, 418, 518, 520 a-d) is a capillary tube (518) integrated into a tubing connection in the downstream of the carbon dioxide separation system.

9. Carbon dioxide separation system of any of the claims 1 - 7, wherein the flow restrictor (125, 218, 318, 418, 518, 520 a-d) is a nozzle (218, 318) integrated into a tubing connection in the downstream of the carbon dioxide separation system.

10. Carbon dioxide separation system of any of the claims 1 - 7, wherein the flow restrictor (125, 218, 318, 418, 518, 520 a-d) is a small orifice in the passage of an outer wall of the separation device to a downstream tubing connection.

11. Carbon dioxide separation system of any of the claims 1 - 7, wherein the flow restrictor (125, 218, 318, 418, 518, 520 a-d) consists of multiple parallel individual backpressure elements of capillaries (518) and/ or nozzles (218, 318) of limited aperture (418) type.

12. Carbon dioxide separation system of any of the preceding claims, wherein a mixer is integrated into the separation device as a single compartment device.

13. Carbon dioxide separation system of any of the claims 1 - 12, wherein the separation device (20, 100, 200, 300, 400, 500) is attached to a mixer (22) as two compartments in one unit, separated by a diaphragm (519).

14. Carbon dioxide separation system of claim 13, wherein the flow restrictor (125, 218, 318, 418, 518, 520 a-d) is a capillary (518) integrated in the internal diaphragm (519).

## Patentansprüche

1. Kohlendioxidabscheidungssystem für ein Brennstoffzellensystem, umfassend eine Abscheidevorrichtung (20, 100, 200, 300, 400, 500), die derart ausgebildet ist, dass sie eine Fluidphase, eine Kohlendioxidphase und ein Zweiphasenfluid bestehend aus einem Fluid und Kohlendioxid enthält, wobei die Abscheidevorrichtung (20, 100, 200, 300, 400, 500) einen Zweiphasenfluideinlass (201, 301, 401, 501), einen Fluidauslass (120, 202, 302, 402, 522) und einen Kohlendioxidauslass (21, 203, 303, 403, 503) sowie eine Kohlendioxidabscheidungsmembran (190, 210, 310, 410, 510) umfasst; wobei das Abscheidungssystem weiterhin einen Strömungsbegrenzer (125, 218, 318, 418, 518, 520 a-d) zur Erzeugung eines Gegendrucks umfasst, um das abgeschiedene Kohlendioxid durch die Membran (110, 210, 310, 410, 510) zu pressen, wobei der Strömungsbegrenzer (125, 218, 318, 418, 518, 520 a-d) mindestens eine schmale Öffnung aufweist und stromabwärts der Abscheidevorrichtung (20, 100, 200, 300, 400, 500) angebracht ist, **dadurch gekennzeichnet, dass** die Membran (110, 210, 310, 410, 510) derart in der Abscheidevorrichtung positioniert ist, dass zumindest ein Teil der gesamten Membranfläche über dem Zweiphasenfluidpegel angeordnet ist, so dass zumindest ein Teil der gesamten Membranfläche nur mit Kohlendioxid in Berührung ist, das in der Abscheidevorrichtung über dem Zweiphasenfluidpegel enthalten ist, wobei die Abscheidungsmembran (310) im Wesentlichen rohrförmig ist, so dass die Abscheidevorrichtung (300) in zwei im Wesentlichen koaxiale Kammern geteilt ist, wobei das Fluid, das Zweiphasenfluid und komprimiertes Kohlendioxid in einer inneren Fluidkammer (314) befindlich sind und wobei eine Kohlendioxidsammelkammer (315) die Fluidkammer umgibt und das abgeschiedene Kohlendioxid zu dem Kohlendioxidauslass (303) weiterleitet, und wobei an einem oberen Flansch (305) ein Auslassrohr (302) angebracht ist und sich durch ein Sammelrohr (317) in die Fluidkammer (314) erstreckt.

2. Kohlendioxidabscheidungssystem nach Anspruch 1, wobei die Abscheidevorrichtung (20, 100, 200, 300, 400, 500) eine Topfform aufweist.

3. Kohlendioxidabscheidungssystem nach einem der vorstehenden Ansprüche, wobei sich die Kohlendioxidphase über dem Zweiphasenfluid befindet und wobei der Fluideinlass (201, 301, 401, 501) am oberen Ende der Vorrichtung angeordnet ist und der Fluidauslass (120, 202, 302, 402, 522) am unteren Ende der Vorrichtung angeordnet ist.

4. Kohlendioxidabscheidungssystem nach einem der vorstehenden Ansprüche, wobei der Kohlendioxidauslass (203, 303, 403, 503) nahe dem oberen Ende der Vorrichtung angeordnet ist.

5. Kohlendioxidabscheidungssystem nach einem der Ansprüche 1 bis 4, wobei der Kohlendioxidauslass (203, 303, 403, 503) nahe dem unteren Ende der Vorrichtung angeordnet ist, um Kondenswasser zu entfernten.

6. Kohlendioxidabscheidungssystem nach Anspruch 1, wobei der Fluideinlass (301) ebenfalls an dem oberen Flansch (305) angebracht ist.

7. Kohlendioxidabscheidungssystem nach einem der vorstehenden Ansprüche, wobei das Verhältnis des Gesamtquerschnitts der Öffnungen in dem Strömungsbegrenzer (125, 218, 318, 418, 518, 520 a-d) zum Querschnitt der das Fluid und das Zweiphasenfluid enthaltenden Fluidkammer in der Abscheidevorrichtung (20, 100, 200, 300, 400, 500) nicht größer als 1/10 ist.

8. Kohlendioxidabscheidungssystem nach einem der vorstehenden Ansprüche, wobei der Strömungsbegrenzer (125, 218, 318, 418, 518, 520 a-d) ein in eine Rohrverbindung stromabwärts des Kohlendioxidabscheiders integriertes Kapillarrohr (518) ist.

9. Kohlendioxidabscheidungssystem nach einem der Ansprüche 1 bis 7, wobei der Strömungsbegrenzer (125, 218, 318, 418, 518, 520 a-d) eine in eine Rohrverbindung stromabwärts des Kohlendioxidabscheiders integrierte Düse (218, 318) ist.

10. Kohlendioxidabscheidungssystem nach einem der Ansprüche 1 bis 7, wobei der Strömungsbegrenzer (125, 218, 318, 418, 518, 520 a-d) eine kleine Mündung im Durchlass einer Außenwand der Abscheidevorrichtung zu einer stromabwärts gelegenen Rohrverbindung ist.

11. Kohlendioxidabscheidungssystem nach einem der Ansprüche 1 bis 7, wobei der Strömungsbegrenzer (125, 218, 318, 418, 518, 520 a-d) aus mehreren parallelen, einzelnen Gegendruckelementen von Kapillaren (518) und/oder Düsen (218, 318) mit begrenzter Öffnung (418) besteht.

12. Kohlendioxidabscheidungssystem nach einem der vorstehenden Ansprüche, wobei ein Mischer in die Abscheidevorrichtung als Einzelkammervorrichtung integriert ist.

13. Kohlendioxidabscheidungssystem nach einem der Ansprüche 1 bis 12, wobei die Abscheidevorrichtung (20, 100, 200, 300, 400, 500) an einem Mischer (22) in Form von zwei Kammern in einer Einheit angebracht ist, die durch ein Diaphragma (519) getrennt sind.

14. Kohlendioxidabscheidungssystem nach Anspruch 13, wobei der Strömungsbegrenzer (125, 218, 318, 418, 518, 520 a-d) eine in das innere Diaphragma (519) integrierte Kapillare (518) ist.

## Revendications

1. Séparateur de dioxyde de carbone pour pile à combustible comprenant un dispositif de séparation (20, 100, 200, 300, 400, 500) adapté à contenir une phase fluide, une phase de dioxyde de carbone et un fluide à deux phases comportant du fluide et du dioxyde de carbone, le dispositif de séparation (20, 100, 200, 300, 400, 500) comprenant une entrée de fluide à deux phases (201, 301, 401, 501), une sortie de fluide (120, 202, 302, 402, 522) et une sortie de dioxyde de carbone (21, 203, 303, 403, 503) et une membrane de séparation de dioxyde de carbone (110, 210, 310, 410, 510) ; le système de séparation comprenant en outre une vanne papillon (125, 218, 318, 418, 518, 520 a-d) pour créer une contre-pression pour presser le dioxyde de carbone séparé à travers la membrane (110, 210, 310, 410, 510), la vanne papillon (125, 218, 318, 418, 518, 520 a-d) comprenant au moins une ouverture étroite et étant montée en aval du dispositif de séparation (20, 100, 200, 300, 400, 500), **caractérisé en ce que** la membrane (110, 210, 310, 410, 510) est mise en position dans le dispositif de séparation de sorte qu'au moins une partie de la zone totale de la membrane est agencé au-dessus du niveau de fluide à deux phases de manière qu'au moins une partie de la zone totale de la membrane est seulement en contact avec le dioxyde de carbone contenu dans le dispositif de séparation au-dessus du niveau de fluide à deux phases, la membrane de séparation (310) étant sensiblement tubulaire, divisant le dispositif de séparation (300) en deux compartiments sensiblement coaxiaux par cela, le fluide, le fluide à deux phases et le dioxyde de carbone comprimé étant agencé dans un compartiment intérieur de fluide (314), et un compartiment de collection de dioxyde de carbone entourant le compartiment de fluide et transférant le dioxyde de carbone séparé à la sortie de dioxyde de carbone (303), et un tubage de sortie (302) étant monté sur une bride supérieure (305) et prolongé dans le compartiment de fluide (314) à travers un tube de collection (317).

2. Séparateur de dioxyde de carbone selon la revendication 1, le dispositif de séparation (20, 100, 200, 300, 400, 500) ayant la forme d'un pot.

3. Séparateur de dioxyde de carbone selon l'une quelconque des revendications précédentes, la phase de dioxyde de carbone étant agencé au-dessus le fluide à deux phases, et l'entrée de fluide (201, 301, 401, 501) étant agencé à la partie supérieure du dispositif et la sortie de fluide (120, 202, 302, 402, 522) étant agencé à la partie inférieure du dispositif.

4. Séparateur de dioxyde de carbone selon l'une quelconque des revendications précédentes, la sortie du dioxyde de carbone (203, 303, 403, 503) étant agencé près de la partie supérieure du dispositif.

5. Séparateur de dioxyde de carbone selon l'une quelconque des revendications 1 à 4, la sortie du dioxyde de carbone étant agencé près de la partie inférieure du dispositif en vue d'éliminer de l'eau de condensation.

6. Séparateur de dioxyde de carbone selon la revendication 1, l'entrée de fluide (301) étant monté aussi à la bride supérieure (305).

7. Séparateur de dioxyde de carbone selon l'une quelconque des revendications précédentes, le rapport de la section des ouvertures dans la vanne papillon (125, 218, 318, 418, 518, 520 a-d) à la section du compartiment de fluide contenant le fluide et du fluide à deux phases dans le dispositif de séparation (20, 100, 200, 300, 400, 500) n'est pas supérieur à 1/10.

8. Séparateur de dioxyde de carbone selon l'une quelconque des revendications précédentes, la vanne papillon (125, 218, 318, 418, 518, 520 a-d) étant un tube capillaire (518) intégré dans un raccord de tubage en aval du séparateur de dioxyde de carbone.

9. Séparateur de dioxyde de carbone selon l'une quelconque des revendications 1 à 7, la vanne papillon (125, 218, 318, 418, 518, 520 a-d) étant une buse (218, 318) intégrée dans un raccord de tubage en aval du séparateur de dioxyde de carbone.

10. Séparateur de dioxyde de carbone selon l'une quelconque des revendications 1 à 7, la vanne papillon (125, 218, 318, 418, 518, 520 a-d) étant une ouverture petite dans le passage d'une paroi extérieure du dispositif de séparation à un raccord de tubage en aval.

11. Séparateur de dioxyde de carbone selon l'une quelconque des revendications 1 à 7, la vanne papillon (125, 218, 318, 418, 518, 520 a-d) consistant en des éléments multiples parallèles individuels de contre-pression des capillaires (518) et/ou des buses (218, 318) de type ouverture limitée (418).

12. Séparateur de dioxyde de carbone selon l'une quelconque des revendications précédentes, un mélangeur étant intégré dans le dispositif de séparation en tant que dispositif à compartiment unique.

13. Séparateur de dioxyde de carbone selon l'une quelconque des revendications 1 à 12, le dispositif de séparation (20, 100, 200, 300, 400, 500) étant attaché à un mélangeur (22) en tant que deux compartiments dans une unité séparé par un diaphragme (519).

14. Séparateur de dioxyde de carbone selon la revendication 13, la vanne papillon (125, 218, 318, 418, 518, 520 a-d) étant un capillaire (518) intégré dans le diaphragme intérieur (519).
